# EUROPEAN PATENT SPECIFICATION

(11) **EP 1 075 341 B1**
(45) Date of publication and mention of the grant of the patent: **31.07.2002**
(21) Application number: 99920948.9
(22) Date of filing: 07.05.1999
(51) Int. Cl.: B23B 31/30, B23B 31/14

(54) **TOOL CHANGE APPARATUS**
WERKZEUGWECHSELGERÄT
DISPOSITIF DE CHANGEMENT D'OUTILS

(30) Priority: 07.05.1998 GB 9809603
(43) Date of publication of application: 14.02.2001
(73) Proprietor: Renishaw plc, Wotton-Under-Edge Gloucestershire GL12 8JR (GB)
(72) Inventor: VANHINSBERGH, Gregory Stanley, Bristol BS32 8DN (GB)
(74) Representative: Waite, John
(86) International application number: GB9901215
(87) International publication number: WO9956901

(56) References cited:
- EP-A- 0 074 332
- EP-A- 0 227 620
- EP-A- 0 367 262
- EP-A- 0 394 694
- US-A- 4 729 701

## Description

The present invention relates to a tool changing apparatus, which may be used, for example, on a machine tool (such as a machining centre) or alternatively some other form of coordinate positioning machine, such as a coordinate measuring machine or a robot. More specifically it relates to a machine tool according to the preamble of claim 1.

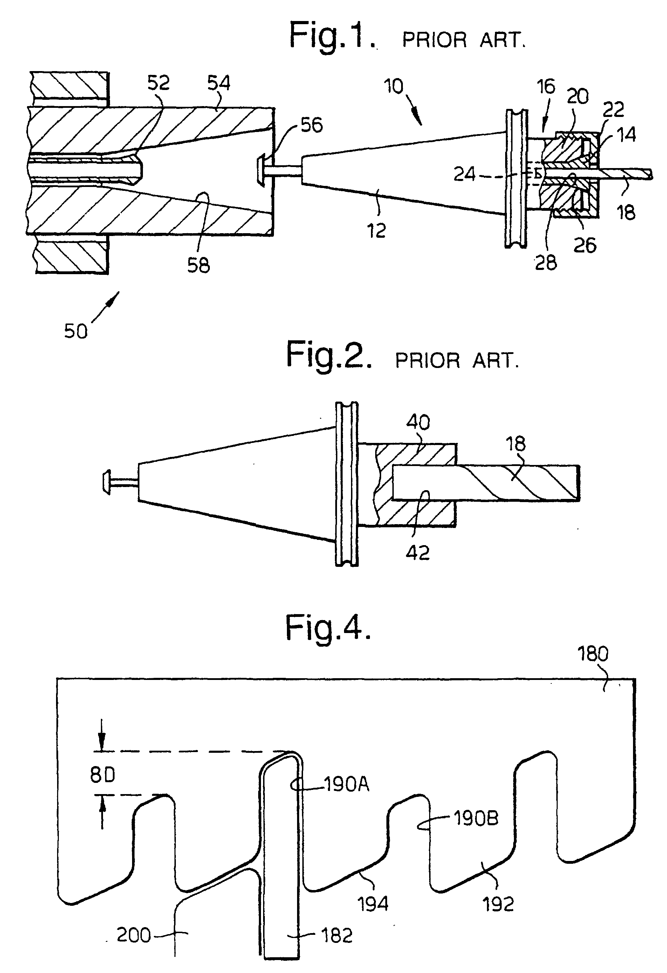

A known tool changing apparatus used on a machining centre is shown in Fig.1, and comprises a tool unit 10 which is made up of a taper shank 12, a collet chuck 14 and collet 16, and a cutting tool 18. The collet chuck 14 has a spigot 20 which extends from the taper shank 12, and a locking cap 22 which is in screw-threaded engagement with the spigot 20. The collet 16 is made up of one or more pairs of jaws which grip the cutting tool 18 within a central bore 24 in the spigot 20, by the action of the locking cap 22 on the collet 16 as the locking cap is tightened. Tightening of the cap urges the collet 16 into the bore 24, whereupon angled surfaces 26,28 on the collet and the mouth of the bore 24 respectively cooperate to urge the jaws of the collet 16 to close against the cutting tool 18, and also to urge the collet 16 into a substantial frictional engagement with the inner surface of the bore 24.

In an alternative prior art tool assembly, shown in Fig.2, the collet and collet chuck are replaced by a hydraulically actuated collet assembly 40 having a central bore 42 within which a cutting tool 18 is gripped by frictional engagement between the interior wall of the bore 42 and the cutting tool 18. Frictional engagement and disengagement between the interior wall of the bore 42 and the cutting tool is achieved by varying the pressure in one or more hydraulic cavities (not shown) within the body of the collet assembly 40, and situated adjacent the interior wall, causing it to deflect to grip the tool.

A specific example of a hydraulically actuated tool gripping assembly is illustrated in European Patent Specification No. 0074332 which corresponds to the preamble of claim 1. The assembly illustrated in this specification includes a chuck having a cavity and at least one hydraulic chamber located within the chuck adjacent an interior wall of the cavity and includes actuating means for adjusting the hydraulic pressure thereby to adjust the extent of inward deflection of the interior wall of the cavity to enable the gripping pressure on the tool to be varied.

Alternatively a method of shrink-fitting, which involves the rapid heating and cooling of the collet assembly may be employed.

In each case, the automated exchange of a cutting tool within a spindle 50 of a machining centre, for example, involves the exchange of the entire tool unit. Such an exchange operation is performed by an automated retraction and release mechanism 52 within the rotating spindle shaft 54, which grips a stud 56 to pull the tool unit into a taper chuck 58 within the spindle shaft 52.

The present invention provides an alternative tool changing system, in which a cutting tool is engaged and released within a chuck in the spindle shaft by means of a variation in hydraulic pressure within one or more cavities of hydraulic fluid situated adjacent the interior wall of the chuck. Variation in the hydraulic pressure causes a corresponding deflection of the interior wall of the chuck, urging it into frictional engagement with the cutting tool. The present invention provides a machine tool according to the combination of features of claim 1.

A further aspect of the invention provides a spindle shaft for a machine tool having a chuck comprising a substantially cylindrical cavity formed at one end of the shaft, and at least one hydraulic expansion chamber within the spindle shaft, and located adjacent the cavity, wherein pressure within the, or each chamber is adjustable thereby to cause deflection of an interior wall of the cavity and frictional engagement or release between the wall of the cavity and a cutting tool.

Preferably, the hydraulic pressure within the or each chamber is adjustable by an actuating mechanism which is operable by rotation of the spindle.

Embodiments of the invention will now be described, by way of example, and with reference to the accompanying drawings in which:
Fig 3 is a section through a first embodiment of tool change apparatus;
Fig 4 is a section through a detail of Fig 3;
Fig 5A is a section through a second embodiment of tool change apparatus;
Fig 5B is a view from below of the apparatus of Fig 5A;
Fig 6 is a section through a third embodiment of tool change apparatus;
Fig 7 is a section through a fourth embodiment of tool change apparatus; and
Fig 8 is a section through a fourth embodiment of tool change apparatus.

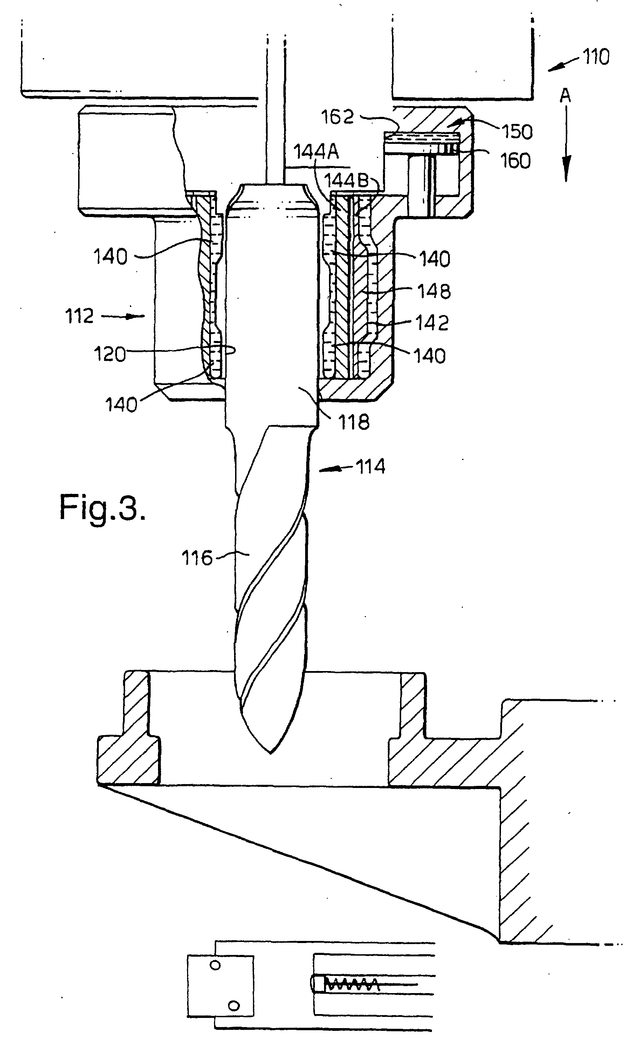

Referring now to Fig 3, a spindle 110 of a machining centre carries a rotatable chuck 112, within which is retained a cutting tool 114. The cutting tool 114 includes a cutting element 116 integrally connected to a cylindrical tool shank 118, and is releasably located and retained within the chuck 112 by means of a frictional engagement between the interior wall of a cavity 120 within the chuck 112, and the outer surface of the tool shank 118. The frictional engagement between the tool shank 118 and the cavity 120 is controlled by varying the pressure within a pair of annular hydraulic expansion chambers 140, in the chuck 112. An increase in pressure within the expansion chambers 140 results in a deformation of the internal wall of cavity 120 in the region adjacent the chambers, thereby causing the requisite frictional engagement between the tool shank 118 and the interior wall of the cavity 120, in order to retain the cutting tool 114 within the chuck 112.

Pressure within the expansion chambers 140 may be increased or decreased by means of a latching detent mechanism 150, provided on the chuck. The detent mechanism 150 includes a hydraulic piston 160, which is axially movable within a correspondingly configured bore 162. Axial displacement of the piston 160 in the direction of the arrow A will result in an increase in hydraulic pressure within the system, and a corresponding increase in pressure within the expansion chambers 140 (and thereby an inward deformation of the cavity walls 120). Conversely, an axial displacement of the piston 160 within the bore 162 in a direction away from the arrow A will result in a corresponding reduction in pressure within the expansion chambers 140, resulting in the inner wall of the cavity 120 returning to its undeformed state, thereby allowing the tool to be removed from the chuck 112. In a modification, a plurality of bores 162 and pistons 160 may be provided about the axis, or a single annular piston situated coaxially with the spindle axis.

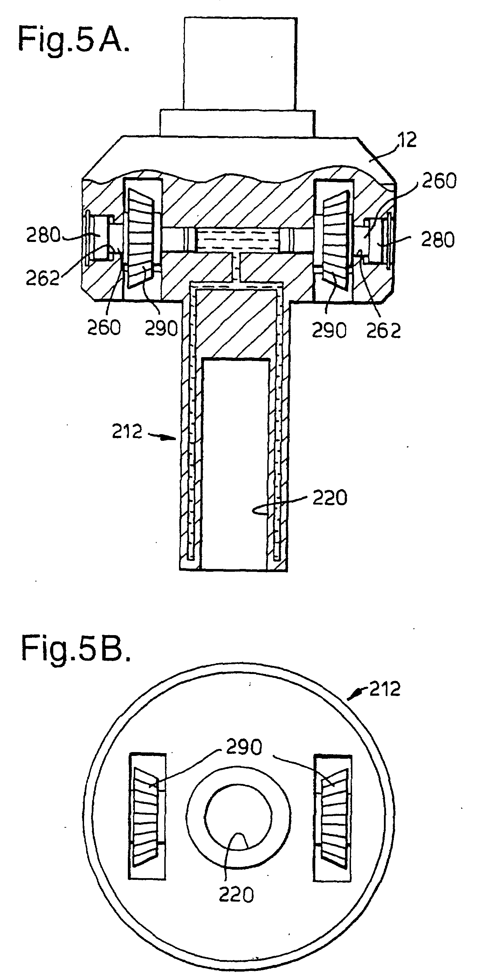

Referring now to Fig 4, the detent mechanism includes a catch ring 180, mounted to the base of the piston 160, and a catch member 182, mounted to the main body of the chuck 112. The catch ring 180 has a crenellated profile at its lower circumference. This profile has the form of a plurality of axially extending slots 190A,B, separated by teeth 192. The depth of the slots 190A is greater than the depth of the slots 190B, so that when the catch member 182 is engaged in a slot 190A the hydraulic pressure within the system will be lower than when the catch member 182 is engaged within a slot 190B.

Operation of the detent mechanism to move the catch member 182 from engagement within a slot 190A, to engagement within the slot 190B is performed by means of a plunger 200, which is mounted to a relatively fixed part of the machine (with respect to the relatively movable spindle 110). Relative axial movement of the spindle 110 and plunger 200 when the plunger 200 is in engagement with one of the angular surfaces 194 of a tooth 192 will cause a corresponding relative axial movement of the catch ring 180 and catch member 182, until the catch member 182 disengages completely from a slot 190A. At this point, the mutually engaging surfaces of the plunger 200 and tooth 192, in conjunction with the axial biasing force will cause a relative rotation of the plunger 200 and catch member 182 on the one hand, and the catch ring 180 on the other, such that the catch member 182 will slide down the surface of the adjacent tooth 192 and into engagement with a slot 190B. The net result of this operation is an axial displacement of the catch ring 180 and the piston 160 in the direction of the arrow A by an amount ΔD. This causes an increase in the hydraulic pressure within the system by an amount sufficient to cause deformation within the interior of the cavity 120, and provide the frictional engagement between the surface of the tool shaft 118 and the cavity 120.

Referring again to Fig 3, the hydraulic system includes a substantially annular auxiliary chamber 142, separated from the expansion chambers 140 by two annular walls 144A,B, separated from each other by a further annular cavity 146, which is not part of the hydraulic system, and is vented to external pressure. The outer of the two walls 144B, is relatively thin at its upper and lower ends, but includes a relatively thick, and therefore massive, central portion 148. During rotation of the chuck at high angular velocity, the centripetal forces experienced by the relatively massive portion 148 of the outer wall 144B will cause deformation of the relatively thin upper and lower portions of the outer wall 144B, and a corresponding outward deflection of the central portion 148 into the auxiliary chamber 142. Because the interstitial cavity 146 is vented to the external atmosphere, only minimal deformation of the inner wall 144A will occur. The net result is therefore an increase in the hydraulic pressure of the system with increasing angular velocity of the chuck 112, and correspondingly an increase in the frictional engagement between the surface of the tool shaft 118 and the interior cavity 120 of the chuck; the retention force of the tool 114 within the chuck 112 therefore increases with the increasing angular velocity of the chuck 112. This feature may be used separately to provide automated tool changing without a detent mechanism; tool changing would then be actuated on the basis of increasing/decreasing the angular velocity of the spindle when the tool shaft 18 lies within the cavity 120.

A second embodiment of tool changing system is shown in Figs 5A and 5B, in which figures, the hydraulic system providing releasable retention and location of the tool unit within the chuck is shown only in schematic form. The system being, in all respects which are not illustrated or discussed in detail, similar to that of the system of Fig 3. The system of Figs 5A and 5B has an alternative actuating mechanism controlling the variation in hydraulic pressure within the chuck 212. The system includes a pair of pistons 260, which are radially movable within correspondingly extending bores 262. Each of the pistons is radially displaceable within the bore by means of a lead screw 280. Rotation of the lead screw 280 is driven by means of a ring 290 of gear teeth, accommodated within axially extending slots 300, provided within the body of the chuck 212. Rotation of the rings 290 of gear teeth therefore will cause radial displacement of the pistons 260 within the bores 262, and a corresponding variation in the hydraulic pressure within the system. Such rotation is performed by engaging the rings 290 with correspondingly configured driving rings (not shown), housed on a magazine port, within which a tool unit (which here is simply a cutting tool) is retained. Relative rotation of the magazine port and the chuck when the rings 290 are in engagement with the driving rings, and the cutting tool 114 is within the cavity 220 of the chuck 212, will therefore provide the change in hydraulic pressure either to engage or release the tool unit 114 with, or from the chuck 212, as the case may be.

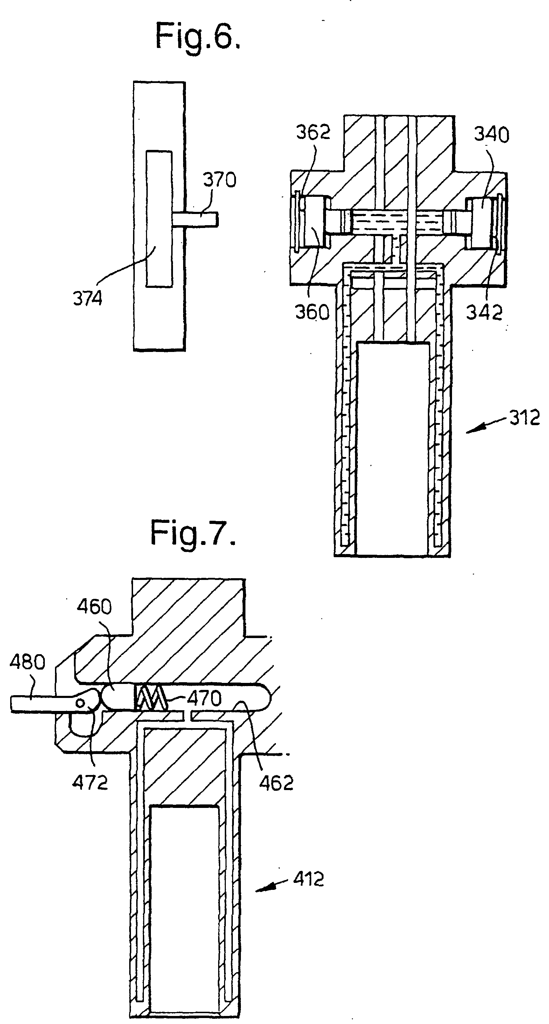

A third embodiment of the present invention, comprising yet a further alternative actuating mechanism, will now be described with reference to Fig 6. The body of the chuck 312 contains a pressure limitation plug 340, movable within a radially extending bore 342. Clamping plug 360 is movable within a diametrically opposing radially extending bore 362. A clamping plug 360 is engageable with a suitably configured spigot 370 provided on a docking station 372. The spigot 370 is rotatable by means of a motor 374, powered suitably by electricity, air or hydraulic pressure, all of which are readily available in a machine tool environment. Engagement of the spigot 372 with the plug 360, and subsequent rotation thereof by means of the motor 374 will cause axial displacement of the clamping plug 360 within the bore 362, and thereby a corresponding increase or decrease in the hydraulic pressure within the chuck 312. Preferably, the clamping plug 360 is rotated by means of the spigots 372 between a pair of abutments (not shown), defining the limits of displacement of the plug 360 within the bore 362. The resultant pressure within the hydraulic system as a result e.g. of an inward radial displacement of the clamping plug 362 until engagement is achieved with an abutment, is adjusted by means of the pressure limitation plug 340. By means of the pressure limitation plug, the hydraulic pressure may be regulated such that sufficient pressure exists within the system to retain a tool within the chuck 312, and yet also enable the release thereof for a further tool change operation. The type and size of pressure limitation plugs used may be modified as appropriate to obtain the requisite pressures, and magnitude of adjustability.

Referring now to Fig 7, a further alternative actuation mechanism is described, in which a clamping plug 460 extends within a radially extending bore 462. The plug 460 is biased in a radially outward direction by means of a spring 470, and into engagement with a cam 472 provided on a locking lever 480. The cam 472 has a surface configured such that rotation of the lever 480 between the horizontally extending position and a vertically extending position will produce a corresponding radial movement of the plug 460 within the bore 462 to clamp or release a tool to the chuck 412 by means of hydraulic pressure. Preferably, the lever 480 has a free end 482 which is configured for engagement with a corresponding catch on a part of the machine relative to which the chuck 412 is movable. In this way, clamping and release of a tool within the chuck 412 may be achieved simply be means of relative movement of two parts of the machine. This will therefore obviate the need for a separate actuation mechanism, such as the type described in Fig 6, and therefore simplifies the system greatly, since no power for such an actuation mechanism is required, and no system is needed to control such an actuation mechanism.

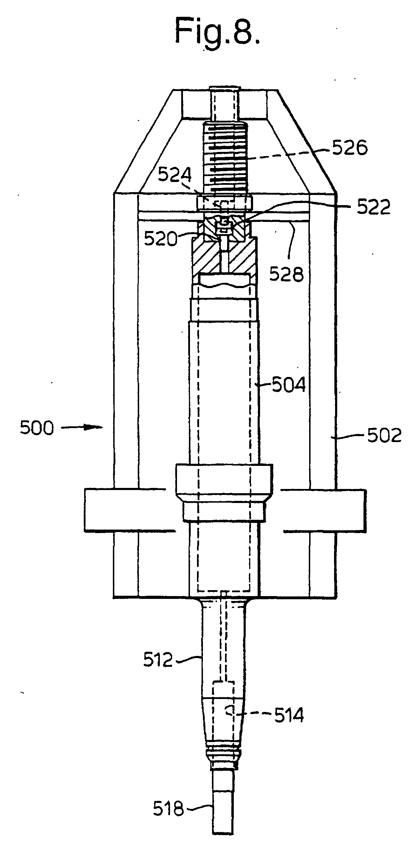

A further embodiment will now be described with reference to Fig 8. A spindle 500 has a substantially cylindrical housing 502 relative to which a spindle shaft 504 is rotatable, via journal bearings (not shown). The shaft 504, has, at its lower end, a chuck 512 provided by a cavity 514, and within which a cutting tool 518 is retained by means of hydraulic pressure as described in connection with earlier embodiments. Actuation of pressure change within the hydraulic system is effected by means of a regulating valve 520, which is rotatable relative to the spindle shaft 504 in order to alter the hydraulic pressure. Rotation of the regulating valve 520 is actuated by a detent mechanism including a recess 522, of square cross-section, in the top of the regulating valve 520, and a correspondingly configured retractable detent member 524. The detent member 524 may be retracted by means of a solenoid 526, mounted to the spindle housing 502 on a plate 528. The detent member 524 is prevented from rotating relative to the housing 502 by means of a suitably configured aperture within the plate 528, through which it must pass in order to engage the recess 522. The hydraulic pressure is thus regulated by operating the solenoid 526 to enable engagement of the detent member 524 with the recess 522 within the regulating valve 520, and subsequently rotating the spindle shaft 504. Because the detent member 524 may not rotate relative to the housing 502, rotation of the spindle shaft 504 when the detent member 524 is engaged with the regulating valve 520 will cause the regulating valve 520 to rotate relative to the spindle shaft 504, thereby to vary the pressure.

The different features of the invention described above are not necessarily limited to their association with the embodiments in connection with which they were described. Many aspects of the invention are generally applicable to other embodiments of the invention described herein and are to be considered as being limited only by the scope of the appended claims.

## Claims

1. A machine tool including, a spindle (110) having a housing and a spindle shaft journalled for rotation relative to the housing, the spindle shaft having at one end a chuck (112) for receiving a cutting tool (114), the chuck comprising a cavity (120), and at least one hydraulic chamber (140) located within the chuck adjacent an interior wall of the cavity, the machine further comprising an actuating mechanism, for adjusting the hydraulic pressure thereby to adjust the extent of inward deflection of the interior wall of the cavity and thereby to enable engagement or release of the cutting tool within the cavity **characterised in that** the actuating mechanism is at least partly operable by rotation of the spindle shaft.

2. A machine tool according claim 1 **characterised in that** the actuating mechanism comprises a rotatable regulating valve provided on the spindle shaft for adjusting hydraulic pressure within the at least one chamber, the actuating mechanism further including a retractable catch member (182) mounted to the spindle housing which is engageable with the regulating valve, wherein rotation of the spindle shaft relative to the spindle housing when the catch member (182) is engaged with the regulating valve causes rotation of the regulating valve relative to the spindle shaft, and consequently a variation in hydraulic pressure within the at least one chamber (140).

3. A machine tool according to claim 2 wherein the actuating mechanism includes a plunger (200) for retracting the catch member (182).

4. A machine tool according to claim 1, wherein the at least one hydraulic chamber comprises one or more expansion chambers (140), and one or more auxiliary chambers (142), the expansion and auxiliary chambers (140, 142) being hydraulically interconnected, the or each auxiliary chamber having a wall (144B) which is relatively deflectable under loads present during operational rotation of the spindle shaft, thereby to cause the wall (144B) to move outwards and to increase the hydraulic pressure within the auxiliary chamber (142), and, by virtue of their interconnection, the expansion chambers (140).

5. A machine tool according to claim 1 comprising a rotatable regulating valve on the spindle for adjusting the pressure within the or each chamber (140, 142), wherein the valve is rotatable to regulate the pressure in the or each chamber (140, 142) by engagement of mutually engageable elements (192, 194, 200) on the spindle shaft and on a part of the machine relative to which the spindle is movable, when the spindle shaft is rotating.

## Patentansprüche

1. Werkzeugmaschine mit einer Spindel (110), die ein Gehäuse und einen Spindelschaft aufweist, der zur Drehung relativ zu dem Gehäuse gelagert ist, wobei der Spindelschaft an einem Ende ein Futter (112) zur Aufnahme eines Schneidwerkzeuges (114) aufweist,
wobei das Futter einen Hohlraum (120) und zumindest eine hydraulische Kammer (140) umfasst, die in dem Futter benachbart einer Innenwand des Hohlraumes angeordnet ist, wobei die Maschine ferner einen Betätigungsmechanismus zum Einstellen des hydraulischen Druckes umfasst, um dadurch das Ausmaß einer Einwärtsbiegung der Innenwand des Hohlraumes einzustellen und dadurch einen Eingriff oder eine Freigabe des Schneidwerkzeuges in dem Hohlraum zu ermöglichen,
**dadurch gekennzeichnet,**
**dass** der Betätigungsmechanismus zumindest teilweise durch eine Rotation des Spindelschaftes betreibbar ist.

2. Werkzeugmaschine nach Anspruch 1,
**dadurch gekennzeichnet,**
**dass** der Betätigungsmechanismus ein drehbares Regelventil umfasst, das an dem Spindelschaft vorgesehen ist, um einen hydraulischen Druck in der zumindest einen Kammer einzustellen, wobei der Betätigungsmechanismus ferner ein zurückziehbares Fangelement (182) umfasst, das an dem Spindelgehäuse befestigt und mit dem Regelventil in Eingriff bringbar ist, wobei eine Rotation des Spindelschaftes relativ zu dem Spindelgehäuse, wenn das Fangelement (182) in Eingriff mit dem Regelventil steht, eine Rotation des Regelventils relativ zu dem Spindelschaft und folglich eine Änderung des hydraulischen Druckes in der zumindest einen Kammer (140) bewirkt.

3. Werkzeugmaschine nach Anspruch 2,
wobei der Betätigungsmechanismus einen Plunger (200) zum Zurückziehen des Fangelementes (182) umfasst.

4. Werkzeugmaschine nach Anspruch 1,
wobei die zumindest eine hydraulische Kammer eine oder mehrere Expansionskammern (140) und eine oder mehrere Hilfskammern (142) umfasst, wobei die Expansions- und Hilfskammern (140, 142) hydraulisch miteinander verbunden sind, wobei die oder jede Hilfskammer eine Wand (144B) aufweist, die unter Lasten, die während einer Betriebsrotation des Spindelschaftes vorhanden sind, relativ biegbar ist, um dadurch zu bewirken, dass sich die Wand (144B) auswärts bewegt und den hydraulischen Druck in der Hilfskammer (142) und aufgrund ihrer Verbindung der Expansionskammern (140) erhöht.

5. Werkzeugmaschine nach Anspruch 1,
mit einem drehbaren Regelventil an der Spindel zur Einstellung des Druckes in der oder jeder Kammer (140, 142), wobei das Ventil drehbar ist, um den Druck in der oder jeder Kammer (140, 142) durch Eingriff von miteinander in Eingriff bringbaren Elementen (192, 194, 200) an dem Spindelschaft und an einem Teil der Maschine zu regeln, relativ zu dem die Spindel bewegbar ist, wenn der Spindelschaft rotiert.

## Revendications

1. Une machine-outil, dotée d'une broche (110) elle-même ayant un logement et un arbre à broche reposant sur des tourillons pour assurer une rotation relative au logement, l'arbre à broche ayant, à une extrémité, un mandrin (112) servant à loger l'outil de coupe (114), ledit mandrin comprenant une cavité (120), et au moins une chambre hydraulique (140) située à l'intérieur du mandrin adjacent à une paroi interne de la cavité, cette machine-outil comprenant en outre un mécanisme de commande pour régler la pression hydraulique dans le but d'ajuster l'ampleur du fléchissement vers l'intérieur de la paroi interne de la cavité et de permettre l'enclenchement ou le dégagement de l'outil de coupe dans la cavité se caractérisant par le fait que le mécanisme de commande peut être au moins partiellement actionné par une rotation de l'arbre à broche.

2. Une machine-outil conforme la revendication 1 se distinguant par le fait que le mécanisme de commande comporte une soupape de régulation rotative installée sur l'arbre à broche pour régler la pression hydraulique à l'intérieur de la chambre (au moins une), le mécanisme de commande comportant en outre un loquet rétractable (182) monté sur le logement de la broche pouvant lui-même s'enclencher avec la soupape de régulation, où la rotation de l'arbre à broche - par rapport au logement de la broche quand le loquet (182) s'enclenche avec la soupape de régulation - entraîne la rotation de ladite soupape par rapport à l'arbre à broche et, de ce fait, produit un changement de la pression hydraulique à l'intérieur de la chambre (au moins une) (140).

3. Une machine-outil conforme à la revendication 2 dont le mécanisme de commande comporte un poussoir (200) pour rétracter le loquet (182).

4. Une machine-outil conforme à la revendication 1, dont la chambre hydraulique (au moins une) comporte une ou plusieurs chambre(s) d'expansion (140), et une ou plusieurs chambres auxiliaires (142), ces chambres d'expansion et auxiliaires (140,142) étant reliées par des moyens hydrauliques, la ou chaque chambre auxiliaire ayant une paroi (144B) capable de fléchir relativement aux contraintes présentes pendant la rotation fonctionnelle de l'arbre à broche, et, partant de là, entraîner un mouvement vers l'extérieur de la paroi (144B) et l'augmentation de la pression hydraulique dans la chambre auxiliaire (142), et , du fait de leur interconnexion, et dans les chambres d'expansion (140).

5. Une machine-outil conforme à la revendication 1 comportant une soupape de régulation rotative pour régler la pression à l'intérieur de la (ou de chaque) chambre (140,142), ladite soupape étant rotative et servant à régler la pression dans la ou dans chaque chambre (140,142) par l'enclenchement d'éléments pouvant s'enclencher l'un dans l'autre (192,194,200) sur l'arbre à broche et sur une partie de la machine par rapport à laquelle la broche peut bouger quand l'arbre à broche tourne.
